# EUROPEAN PATENT SPECIFICATION

(11) **EP 2 826 811 B1**
(45) Date of publication and mention of the grant of the patent: **01.11.2017**
(21) Application number: 13005837.3
(22) Date of filing: 16.12.2013
(51) Int. Cl.: C08J 5/24, C08G 18/76, C08G 18/30

(54) **Fibre reinforced prepreg and its applications**
Faserverstärkter Prepreg und dessen Anwendungen
Pré-imprégné renforcé de fibres et ses applications

(43) Date of publication of application: 21.01.2015
(73) Proprietor: Polinvent KFT., 1112 Budapest (HU)
(72) Inventor: Nagy, Gábor, 1112 Budapest (HU); Somorjai, Béla, 1112 Budapest (HU); Meiszel, László, 2536 Nyergesújfalu (HU); Balázs, Ferenc Dávid, 2310 Szigetszentmiklós (HU)
(74) Representative: Szentpéteri, Zsolt

(56) References cited:
- US-A- 4 067 845
- US-A- 4 999 383

## Description

The subject of the invention is a reinforced prepreg and its application, especially the use of the prepreg for lining chimneys.

Exhausting of flue gases has thousands of years of history. By exploiting the phenomenon of rising of the hot or warm natural flue gases predominantly chimneys are used for exhausting.

The smoke rising in the chimney is steadily cooling, in the conventional brickset chimney about 15-16 °C per meter. Any material is combusted, the smoke always contains significant amount of water vapour. When it cools, intensive condensation of the water starts at about 50-70 °C. Because of the dissolved CO₂ content the liquid thus formed is faintly acidic, which corrodes the conventional brickset chimneys without lining, ruins the mortar and the concrete, therefore holes and cracks occur in the wall of the chimney, and as a consequence of this carbon dioxide and carbon monoxide can enter the living space.

To avoid danger now many places the chimney of each gas-fired appliance must be provided with acid resistant lining. Chimney lining is determined by many factors: the principle of operation of the combustion plant, the fuel, type and thermal output of the stove or oven, the temperature of the exhausting flue gas, etc. With the development of the chimney technology the significance of the airtight systems is increasing. (See: MSZ EN 845:2010 Planning, implementation, monitoring of flue gas systems). There is no standard yet for the composite liners. The EN 1865 standard refers to the steel tubes, the EN 1457 standard refers to the ceramic tubes, and the EN 14471 standard refers to the PP tubes.

In order to eliminate the chimney lining problems many solutions were elaborated. Metal tubes (for example US Patent No. 4,846,147: Donald M. Townsend, John R. Jaklich: Chimney liner systems, 1989), or solid ceramic tubes with thin wall (for example: Hungarian Patent No. 189890). In case of condensing boilers the use of polypropylene tubes has also become a common practice (for example: Hungarian Patent No. 189890), but the real novelty was the appearance of the composite prepreg.

The chimneys were mainly lined with rigid, stainless steel tubes, flexible stainless steel tubes, or flexible plastic tubes, or with ceramic tubes of constant diameter. The rigid, stainless steel tubes can be built into the non-rectilinear (the so-called declined) or high chimneys only with demolition of the wall. The corrosion guarantee is generally 10 years. The wall of the flexible, stainless steel tubes is thin, therefore they are corroding more easily, and are damaged more easily at pulling in. The flexible plastic tubes can only be used at flue gases of very low temperature. The ceramic tubes can only be used for building new, rectilinear chimneys. Although their heat resistance is excellent, they are brittle, and their tightness at the couplings is uncertain.

The lining tubes which can be prepared from the prepreg are materials, with which any form, any size, any length chimney can be lined without demolition of the wall, and provide a tight lining tube, with solidity approaching that of a steel corrugated pipe, corrosion resistant, heat resistant to some extent, without extension. Lining with the fibre reinforced, prepreg based composite tubes reached an increasingly important role in the European market. (Best known: FuranFlex®, FitFire, Flexfort).

The essence of the prepreg based chimney lining process is that the lining material (special, thermoset, synthetic resin based composite) is pulled into the chimney in plastic form. Following this it is inflated and cured with hot air. The technology allows for the lining to take the shape of the chimney, and can be installed within a short period of time. It has also a great advantage that the composite lining tube is a good thermal insulator (Composite: ∼ 0.4 W/mK, aluminium: 300 W/mK, stainless steel: 16 W/mK), and this way it reduces cooling of the flue gas, and this way reduces condensation.

The suitability of the thermoset matrix based composite lining tubes for the household chimney reconstruction was comprehensively investigated at the Budapest University of Technology and Economics in the years of 1970. The well storable, sufficiently heat resistant AMP-1 and AMP-2 prepreg tubes produced even in commercial amount as a result of the R+D work were successfully used in the practice. Numerous patent applications and publications were prepared from the results of the investigations.

Synthetic resin binding agent prepared with blocked isocyanate, prepared by Bayer was used (Desmodur AP stabile) for the AP-1 and AP-2 *prepregs,* which, close to the room temperature was storable with the Desmophen 550 type polyol (also a Bayer product) for unlimited period of time. In the meantime production of the Desmodur AP stabile was terminated by Bayer, but numerous blocked isocyanates, produced in commercial quantity, are still on the market. But Bayer produces numerous blocked amine compounds, for example for the preparation of latent epoxy resins, well storable at room temperature.

The blocked amines are ketamine or aldimine type compounds, and with isocyanate theoretically these are also suitable for the preparation of polycarbamides of good quality, more thermo resistant than the epoxy resins. But their great disadvantage is that they are expensive, therefore the solutions using them are far from being cost effective, and *the deblocking compounds can cause air pollution.*

More than 10 years later another development team elaborated the solution, which is widespread, and protected by the Hungarian Patent No. 218726 (HU218726B, Kecskeméthy Géza et al.: "Method for the enhancement of the corrosion resistance of a chimney, and lining element for its embodiment"). The main point of the method is that for the formation of the lining element a composite material comprising thermoset, partly polymerized synthetic resin and glass fibre reinforcement system, connecting to the outer wall of a polyolefine tube is used. The material of the matrix is furan or phenoplast resin, or a mixture thereof between 5-95% to 95-5%, with Al(OH)₃, or AnO₃ flame retardant extender, which is prepared by the use of para toluenesulfonic acid as catalyzer. The chimney lining systems prepared with the process mentioned above were successfully used in the conventional open combustion chamber (gravitational) and closed combustion chamber (turbo) boilers (FuranFlex products, see: www.furanflex.com).

It has been proven by now that the phenol, furfurol and the formaldehyde is toxic and carcinogenic, therefore the FuranFlex products are produced with a modified composition. The resin mixture consists of phenol-furan and epoxy resin components, and these together represent less than 35% of the amount of the matrix. The composite contains glass-cloth, graphite, mineral powders and glass powder as inorganic component. Additive containing halogen, or antimony-trioxide cannot be found among the flame retardants used in the composition (see: Material Safety Data Sheet FuranFlex, 2012).

Further products similar to FuranFlex® also exist. Such products are for example the prepreg lining tubes available with the name FlexFort (Wolenta Vegyipari Kft) with epoxide modified phenoplast matrix, and FitFire (Beca Engineering s.r.l) with aqueous base furan matrix.

Although the currently used prepreg based chimney lining composite systems provide a satisfactory solution to many problems, they have serious disadvantages in some characteristics.

Such a disadvantage is for example that some components of the resins may contain materials harmful to health. The resins mentioned are not sufficiently stable, which is characterized by the fact that their shelf life in summer heat (30 °C) is about 1 week, at room temperature (22 °C) is 3 weeks, but even at cellar temperature (8 °C) is only 25 weeks. A further problem is that they can be transported only at 8 °C, in precooled condition, which significantly increases the costs of application. It is also a problem, that their thermo resistance that can be safely performed is 250 °C, which significantly limits their applicability. Furthermore the resin mixture contains even water, therefore at the storage of the prepreg drying may also cause complications.

German patent application No. DE 1295189 is dealing with the preparation of polyurethane foams. The main point of the protected solution is that from different aromatic diisocyanates prepared in commercial quantity (starting mainly from TDI and MDI) and polyols, prepolimers are prepared in a known manner, whose softening point is between 30 °C and 70 °C, therefore they can be pulverized at room temperature. Powdery inorganic compounds (for example borax) or organic compounds (piperazine-hexahydrate), whose water pressure in pure form at a temperature 20 °C lower than the softening temperature of the prepolimer is negligible, which are able to release water of hydration, are added to these powders. In order to regulate the reaction and the foam structure small amount of polyurethane catalyser (for example dibutyltin-di-2-ethilhexanoate) and silicon compounds are added to the powders mentioned above. When this powder mixture is heated to 100 °C, and stored at this temperature for 20-25 minutes, hard or soft foams are obtained in good quality. The disadvantage of this solution is that the solidity of the foams produced in the course of the process is low, and their thermo resistance is low because of the polyurethane bonds. In contrast, in the solution of this invention aromatic polycarbamides are formed, which do not melt even at higher temperature, just slowly graphitize. According to the solution of the invention the hydroxide powders considered to be reactive, and the inactive powders (for example CaCO₃) to be used are dried as far as possible, in order to avoid foam formation as much as possible. The polyisocyanate mixtures according to our invention, which are still liquid at room temperature, mixed with the borax powder mentioned in the German file referred, or with another powders containing crystal hydrate, within a few days provide a polymer matrix curing within a few days, therefore poorly be stored, fragile, and with low solidity.

German patent application No. DE2743884A1 describes the preparation of foamy and non-foamy pastes. Alkaline aqueous solutions, alkaline aqueous suspensions or alkaline metal/alkaline earth metal pulps are used in the presence of compounds containing at least two isocyanate groups per molecules. The volume weight of the foams is 160-390 kg/m³, or bigger, with the characterization: "foams with coarse pores". It is also mentioned in the description, that for the preparation of the solid structural materials from Portland cement, from other cements or from anhydrous plaster 50-400% of the mass of the total mixture is used (Page 15, Paragraph 1). The method described in this patent is somehow similar to the method described by us for the preparation of the 3P resins, because alkali is used in excess, which quickly and totally absorbs the CO₂ released. Although essentially compact materials are mentioned in the patent, specific examples are not mentioned for their preparation.

Follows from the above that the object of the present invention is the elaboration of a prepreg for lining chimneys with which the disadvantages of the solutions mentioned above can be eliminated, where said prepreg doesn't include materials harmful for the health, sufficiently stable, can be stored at room temperature for an unlimited period of time and transportable, its thermo resistance is high, and doesn't include water, or just to a minimum extent, in order to avoid the problems possibly occurring in this connection at the application. Further requirement in relation to the prepreg is to have strong self-extinguishing characteristics.

Surprisingly it has been found that the task of the invention can be solved, if a special composition is used in the prepreg as resin system. It has been found that the task of the invention can be solved with a resin system, which is a liquid polyisocyanate mixture, containing preferably more than 50 % by weight MDI based di- and polyisocyanates, which consists of raw P-MDI, polymer P-MDI homologs and isomers, MDI based prepolymers, modified MDI-s, etc., and in addition to these contains one or more, originally powdery inorganic hydroxides in less than 50 % by weight.

The essence of the invention is that the resin system in the prepreg of the invention is a system storable at room temperature for an indefinite period of time, but the cyclic process resulting in curing can be initiated with water vapour. In the course of heat treatment measurable amount of water vapour diffuses through the so called heat treatment tube, and these, reacting with the polyisocyanates allow the formation of a polycarbamide matrix, and as a result of this self-supporting processes start, and last until the isocyanate groups and/or the inorganic hydroxides run out. As a result of the process unmeltable resin matrix is formed, with strong self-extinguishing characteristics, and with high T_{g} (glass transition temperature). Heat treatment takes the same amount of time as in case of the prepreg materials suitable for chimney lining, known from the prior art. In the course of heat treatment curing is not complete in 100%, therefore final characteristics of the material do not form, but during the 1-2 hours regularly used for heat treatment the structure becomes self-supportive

In the course of the experiments performed for with the prepreg the invention a prepreg material was fixed around such a thin-walled, but perfectly gas and vapour tight aluminium tube, which is the polyethylene tube in inflated condition. The process of heat transfer essentially has not been changed, meanwhile the same steam generator, steam pressure and temperature was used as in case of the polyethylene heat treatment tube. But as a consequence of this, since the resin of the prepreg tube did not receive water from external sources from the flow through steam, even the self-supporting cyclic process did not start, and the prepreg substructure material remained soft, even after 6-8 hour's heat treatment. From this it has become apparent that the key for the process is the steam diffusing through the polyethylene tube, which initiates the cycle process, and as a result of this cycle process system matrix with the characteristics of the invention is forming. The cycle process mentioned above is demonstrated hereunder: 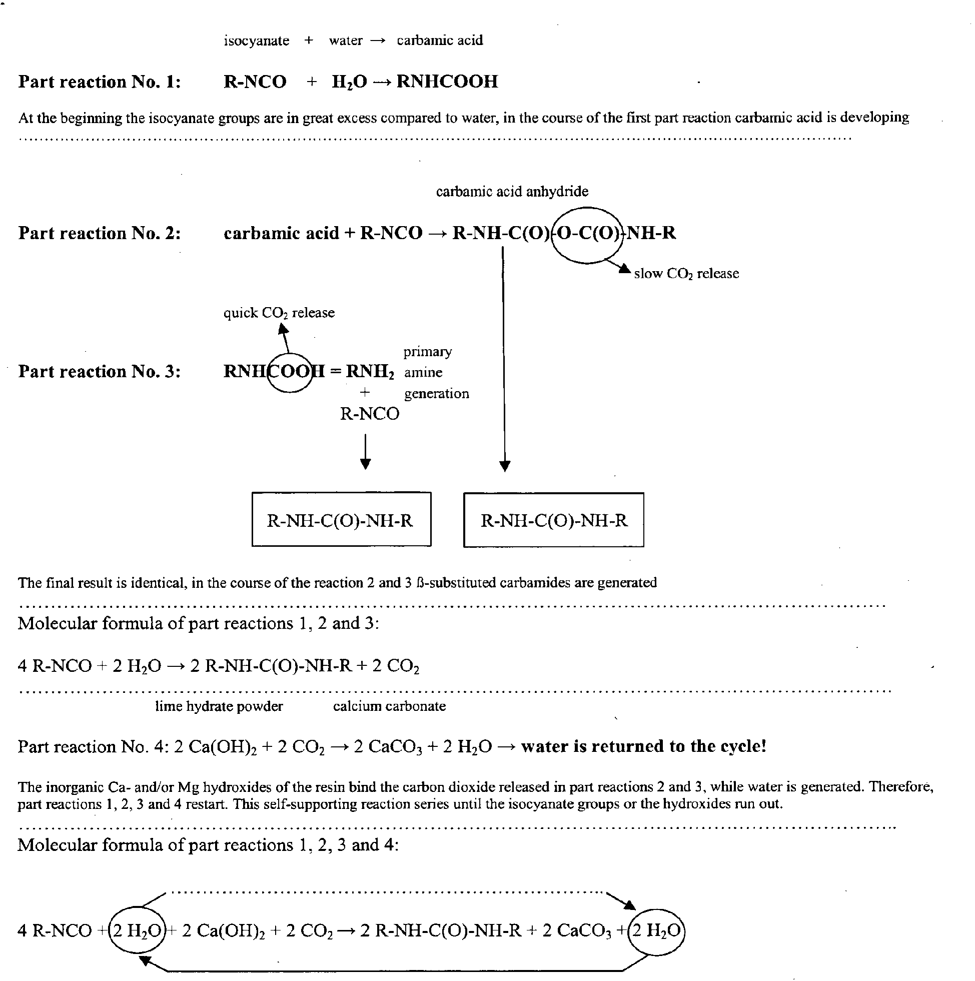 As it is mentioned above, the resin system in the prepreg of the invention is such a liquid polyisocyanate mixture, containing preferably more than 50 % by weight MDI based di- and polyisocyanates, which consists of raw P-MDI, polymer P-MDI homologs and isomers, MDI based prepolymers, modified MDI-s, etc., and in addition to these contains one or more, originally powdery inorganic hydroxides in less than 50 % by weight in suspended form.

The inorganic hydroxides mentioned above, and used in the resin system of the prepreg of the invention, are materials which do not release water at room temperature, but at 90-110 °C, still during heat treatment provide water, by reacting with the CO₂ released in the course of the water-isocyanate reaction. Such inorganic powder can be for example the Ca(OH)₂, Mg(OH)₂, Ba(OH)₂, or any combination thereof. The inorganic hydroxide powders mentioned above preferably contain the hydroxides mentioned above in more than 80 % by weight. In addition to the inorganic hydroxide powders Mg-hydroxide-carbonate 4 MgCO₃Mg(OH)₂·5H₂O), CaO, MgO and similar materials may also occur as impurity, accompanying material and/or water binding material.

The MDI based di- and polyisocyanates used in the resin system of the prepreg of the invention can be for example the following: Ongronat 2100 (mixture of diphenyl-methane-diisocyanates, manufacturer: BC), Lupranat M200R (mixture of diphenyl-methane-diisocyanates, manufacturer: BASF) or the PI-PIR MDI (polyisocianurate-containing MDI, manufacturer: Polinvent), and other such materials, described in the examples. It is obvious for an expert that in the resin systems of the prepreg of the invention the material with structure and characteristics similar to that of the above can be used successfully.

The resin system of the prepreg of the invention may contain different inert fillers, in addition to the reactive components mentioned above, in order to improve solidity and/or reduce inflammability. Such filler can be for example the fine-grained (particle size < 100 µm) calcium carbonate, magnesium-carbonate, dolomite, quartz, corundum, talc, etc. powders or any mixture thereof. The inert fillers mentioned may be present at most in 40 % by weight in the resin system of the invention, relative to the total weight of the resin system.

The resin system of the prepreg of the invention may additionally contain different additives, generally used in the resin system, such as phosphoric-acid type and other flame retardant materials and/or plasticizers. Listing of the additives mentioned as examples can be found in the examples of this description. It is obvious for an expert that the materials with similar structure and characteristics can be used in the resin system without limitation.

The resin system of the prepreg of the invention can be prepared simply, by mixing and homogenizing the suitable components in the necessary amount. Execution of the process, and the means and equipment necessary for it, and their application is apparent for the expert.

The invention further provides a process for the preparation of the prepreg of the invention.

In the process of the invention thermo resistant and low elongation at break substructure material is impregnated with the resin system of the invention with one of the known prepreg preparation methods. For example different glass-cloth, basalt cloth, etc. can be used as substructure material for the prepregs. In the course of impregnation siliconized paper layer is put on the impregnated substructure material, and the material thus obtained is wound up to core rolls of paper, and finally enclosed in a two- or multilayer, water vapour impermeable packaging material with an aluminium layer, or until further processing is stored in a water vapour impermeable sheath. The water vapour impermeable packaging material mentioned is very important because the water vapour molecules probably penetrating from the air can initiate undesired polymerization processes. But the packaging material mentioned allows the product to be stored as long as you like.

In a preferred embodiment of the invention impregnation of the substructure material is performed at 30-70 °C resin temperature.

In another preferred embodiment of the invention impregnation is performed with 0.5-50 m/min rate. In an especially preferred embodiment of the invention the rate of impregnation is 5-15 m/min.

In another especially preferred embodiment of the invention width of the prepreg produced is 650-2600 mm. 1300 mm is especially preferred.

The invention further provides a method for lining chimneys.

In the course of the method mentioned the prepreg of the invention is used for chimney lining. In the course of the method tubes with suitable size are formed from the prepreg prepared with the use of the resin system with one of the methods known, and an extruded, one- or more layered heat treatment tube is put beforehand inside the prepreg tube containing the resin system of the invention, which at the site of application, before or during the heat treatment allows inflation and isotherm hold time, and the tube rolled up along the longitudinal axis is pulled first into a polyester calibration tube, then protected with water-vapour impermeable packaging material, on the site of application, by taking out of the packaging material is let in or pulled in the chimney flue, clamping to the fittings necessary (for example water collecting vessel, flue gas feeding T-fitting, end piece), and the 90-110 °C temperature necessary for curing is provided with the tube with the heat treatment tube mentioned, in such a manner, that hot steam, mixture of steam and air, or mixture of flue gas and steam is blown through the tube, suitably for 1-2 hours. The permeability of the heat treatment tube mentioned is sufficient for diffusing through the H₂O vapour and optionally CO₂ necessary for curing. Following hardening of the prepreg tube, i.e. curing of the synthetic resin the inner heat treatment tube is pulled out. Instead of the polyolefin heat treatment tubes it is preferred to use one- or multi-layered polyamide tubes, with higher water vapour and CO₂ permeability.

### EXAMPLES

### Laboratory and large scale laboratory experiments

We should like to demonstrate or prove the novelty of the technical solution of the invention, and its practical feasibility, by the description of the laboratory, large scale laboratory (some of these is called pilot experiment) and plant experiments, detailed hereunder. Generally materials industrially produced or commercially available are used for the experiments. Abbreviation, name and manufacturer of the materials mentioned in the description are listed in Table 1.

**Table 1**

| Ser. No. | Abbreviation | Name | Manufacturer | Type | Other |
|---|---|---|---|---|---|
| 1. | MDI CR-30-20 | Mixture of diphenyl-methane diisocyanates | BC | Ongronat 2100 | Polymer isocyanate |
| 2. | MDI CR-30HV | Mixture of diphenyl-methane diisocyanates | BC | Currently not produced | Polymer isocyanate |
| 3. | MDI 200R | Mixture of diphenyl-methane diisocyanates | BASF | Lupranat M200R | Polymer isocyanate |
| 4. | PIR MDI | MDI containing polyisocyanate | Polinvent | Experimental product PI-PIR B MDI | Polymer isocyanate |
| 5. | TIPP | Tris-isopropyl-phenyl-phosphate | Chemtura Ltd. | Reofos 95 | Flame retardant, plasticizer |
| 6. | DPO | Diphenyl-octyl-phosphate | Lanxess GmbH. | Disflamoll DPO | Flame retardant, plasticizer |
| 7. | TEG DME | Tetraethyleneglycoldi-methyl-ether | Clariant GmbH. | Tetraethylene-glycol-dimethyl-ether | Plasticizer |
| 8. | Benzoflex | Mixture of benzyl benzoates | Krahn Chemie GmbH. | Benzoflex 2088 | Plasticizer |
| 9. | Mesamoll II. | Mixture of aryl sulfonates | Lanxess GmbH. | Mesamoll TP LXS 51067 | Plasticizer |
| 10. | EA4 | Mixture of epoxy resins | Polinvent | Experimental product PI-Epox EA4 | Epoxy resin |
| 11. | CaCO₃ | Calcium carbonate powder | Solvay | Socal E2 PH EUR | Filler |
| 12. | CaCO₃ | Calcium carbonate powder | Omya | E170 | Filler |
| 13. | Ca(OH)₂ powder | Lime hydrate | Calmit | CL90S | Active filler |
| 14. | Borax | Disodium-tetraborate-decahydrate | Dr. Paul Loh-mann GmbH | Borax | Active filler |
| 15. | Glass-cloth (GF fabric) | Roving cloth | Tolnatext Kft. | GF 42-055 330 g/m², 130 cm wide linen fabric | Substructure material |
| 16. | Polyester fabric | Imola | Lurotex Kft. | Imola 145 145 g/m², 150 cm wide linen fabric | Substructure material |

Following the measurement of the components the impregnating resins of the prepreg of the invention were first homogenized with a laboratory dissolver. Following this the viscosity of the resin was measured with a Brookfield DV-II type viscometer at 20 °C after the preparation, and the measurement was repeated in 1 day and 1 week of age at the same temperature. Between the measurements the samples were stored in a closed space, in protecting gas atmosphere. The same was repeated at 30 °C too, in order to determine the stability and storability of the resin.

Following this a selected glass-cloth type was carefully impregnated with the resins, and short, about 1 meter's prepreg tubes were prepared, as described in Example 1, and these were heat-treated as described in Example 4, and presented at Picture 7.

The tubes prepared this way were visually characterized, and the tubes prepared with the most promising recipe were submitted to gas tightness test and mounting bevel solidity test. What was experienced in the course of the visual inspection, the viscosity data of the starting and stored resins, and the results of the combustion experiments is summarized in Table 2 in case of the most important resin systems.

**Table 2**

| Large scale laboratory chimney prepreg experiments¹ | | | | | | |
|---|---|---|---|---|---|---|
| ***Ser. No.*** | ***Composition*** | ***g*** | ***Temperature of steaming °C*** | ***Curing time*** | ***Quality*** | ***Combustibility*** |
| K/13/1 | MDI CR-30HV | 382 | 100 | 1 hour | The surface of the tube is closed, glossy, difficult to degrade, its solidity is good | Self-extinguishing, immediately goes out after taking away the flame |
| | Lime hydrate | 222 | | | | |
| | Borax | 19 | | | | |
| | | ***T.: 656*** | | | | |
| K/13/3 | MDI CR-30HV | 350 | 0 | - | After 10 days the prepreg hardened in a hermetically closed vessel therefore could not be inflated | - |
| | TIPP | 39 | | | | |
| | Lime hydrate | 117 | | | | |
| | Borax | 150 | | | | |
| | | ***T.: 656*** | | | | |
| K/14 | MDI CR-30HV | 764 | 100 | 1h 40min | The surface of the tube is closed, glossy, after tearing away of the calibrating tube the lower layer is hard, closed, here and there with incomplete resin surface | Self-extinguishing, goes out in 8' after taking away the flame |
| | Lime hydrate | 482 | | | | |
| | | ***T.: 1246*** | | | | |
| K/16/1 | MDI CR-30HV | 344 | 104 | 1h 30min | Closed hard surface with good solidity, with characteristics similar to the previous one | Burns |
| | EA4 | 38 | | | | |
| | Lime hydrate | 200 | | | | |
| | | ***T.: 582*** | | | | |
| K/16/3 | MDI CR-30HV | 344 | 104 | 1h 10min | The tube is closed with hard surface and good solidity. The viscosity of the prepreg increased as a consequence of standing | Burns |
| | EA4 | 38 | | | | |
| | Lime hydrate | 200 | | | | |
| | 1 week (11 days) | ***T.: 582*** | | | | |
| K/20 | PIR-MDI | 344 | 100 | 50min | With closed surface and good solidity. The portion between the calibrating tube and the fabric is a little bit foamy, fragile, friable | Self-extinguishing, goes out in 6' after taking away the flame |
| | TIPP | 38 | | | | |
| | Lime hydrate | 200 | | | | |
| | | ***T.: 582*** | | | | |
| K/25 | MDI CR-30HV | 382 | 102 | 1h 45min | With closed surface and suitable solidity. The portion between the calibrating tube and the fabric is a little bit foamy, fragile, friable | Self-extinguishing, goes out in 2' after taking away the flame |
| | Lime hydrate | 222 | | | | |
| | | ***T.: 604*** | | | | |
| K/28 | MDI CR 30/20 | 482 | 102 | 1h 45min | With low solidity, fragile, cracks. The resin drained down to the lower part, therefore the upper part is resin deficient | Self-extinguishing, goes out in 25' after taking away the flame |
| | Lime hydrate | 140 | | | | |
| | | ***T.: 622*** | | | | |

| ***Ser. No.*** | ***Composition*** | ***g*** | ***Temperature of steaming °C*** | ***Curing time*** | ***Quality*** | ***Combustibility*** |
|---|---|---|---|---|---|---|
| K/48 | MDI M200R | 400 | | 1h 40min² | Viscosity measurement at 20 °C: started from 13700 cP and didn't change. The external and internal surface of the tube is closed, its structure is compact, with suitable solidity | Self-extinguishing, goes out in 8' after taking away the flame |
| | DPO | 40 | | | | |
| | Calcium carbonate French | 200 | | | | |
| | (Omya) | 117 | | | | |
| | Lime hydrate | ***T.: 757*** | | | | |
| K/50 | MDI M200R | 400 | | 1h 50min³ | Viscosity measurement at 20 °C: started from 5000 cP, and became 7000 cP after 2 hours and 15 minutes. The viscosity of the sample put away the previous day increased from 6440 cP to 18.000 cP within 1 day. The external and internal surface of the tube is closed, its structure is compact, has not reached yet its total solidity | Self-extinguishing, goes out in 19' after taking away the flame |
| | TEG DME | 40 | | | | |
| | Calcium carbonate French | 200 | | | | |
| | (Omya) | 117 | | | | |
| | Lime hydrate | ***T.: 757*** | | | | |
| K/54 | MDI M200R | 400 | | 1h 30min¹ | Viscosity measurement at 20 °C: started from 19500 cP, and after 30 minutes became 22.000 cP (2500 cP). | Self-extinguishing, goes out in 10' after taking away the flame |
| | Benzoflex | 40 | | | | |
| | Calcium carbonate French | 200 | | | | |
| | (Omya) | 117 | | | Viscosity measurement at 20 °C: started from 7500, and after 30 minutes increased to 8000 cP (500 cP). | |
| | Lime hydrate | ***T.: 757*** | | | | |
| | | | | | The external and internal surface of the tube is closed, its structure has gas inclusions. Part of the resin drained down to the bottom of the tube, started to foam. | |
| K/55 | MDI M200R | 400 | | 1h 30min¹ | Viscosity measurement at 20 °C: started from 20800 cP, and after 30 minutes increased to 21500 cP (700 cP). | Self-extinguishing, goes out in 12' after taking away the flame |
| | Mesamoll II. | 40 | | | | |
| | Calcium carbonate French | 200 | | | | |
| | (Omya) | 117 | | | Viscosity measurement at 30 °C: started from 6700 cP and after 30 minutes increased to 7000 cP (300 cP). | |
| | Lime hydrate | ***T.: 757*** | | | | |
| | | | | | Poor solidity, with foamy structure. | |
| K/61 | MDI M200R | 400 | | 1h⁴ | Viscosity measurement at 20 °C: started from 30400 cP and after 30 minutes increased to 32700 cP. | Self-extinguishing, goes out in 5' after taking away the flame |
| | TIPP | 40 | | | | |
| | CaCO₃ Solvay | 100 | | | | |
| | Lime hydrate | 117 | | | | |
| | | ***T.: 657*** | | | Viscosity measurement at 30 °C: started from 10100 cP and after 30 minutes increased to 10800 cP. | |
| | | | | | Its structure is compact, gas inclusion can hardly be seen, its solidity is sufficient, its surface is smooth. | |

| | | | | | | |
|---|---|---|---|---|---|---|
| ¹ See in more details in the Experimental part II, 4, Quality control, Picture 4 ²Prepared by mixing in compressed air, with 0,2 bar steam pressure with 0,7 bar air pressure ³Prepared by mixing in compressed air, with 0,2 bar steam pressure with 0,7 bar air pressure ⁴Inflation was started with 0.2 bar initial pressure, and the steam pressure was raised to 0,7 bar. This was maintained until total curing. | | | | | | |

Based on the data of Table 2 it can be concluded that although the different recipes gave very different results, but many of them performed well. In other words, the prepregs impregnated with these were sufficiently storable, while the solidity, gas tightness, optical appearance, strongly self-extinguishing character of the cured tubes proved to be good, and with some of them it was expedient to perform even the more expensive plant experiments. As it can be seen later from the large scale experiments the recipe or system No. K-48 was tried first on larger scale. But for the sufficiently safe production at that time already expensive drying unit and closed dissolver had to be purchased or had it produced.

### Example 1

### Pilot plant production of prepreg impregnation resin

Drying of 39,8 kg A-1 type filler (manufacturer: OMYA, type CaCO₃ powder) was performed in the experimental powder-drying unit of about 100 litre useful volume, prepared from stainless steel, equipped with a mixer, double walled, custom made, at 200 °C. The powder-drying unit is heated with the TOOL-TEMP TT-390 type, nominally 24 kW tool tempering device (the powder drying and tempering device is seen on Picture 1). The powder dryer containing the A1 filler is heated by the heating unit in about 3 hours for the pre-set 200 °C. At this time, by connecting vacuum, the water vapour is completely removed from the drying unit. The dried powder is cooled back in dry air atmosphere, under pressure, and the material of room temperature, by filling into polyethylene bag, and putting the bag into a new steel-plate can of 25 litre useful volume with removable lid and thinned surface, closed hermetically.

Following this, after the A-1 type filler the 23.2 kg A-2 type filler powder (manufacturer: BAUMIT type: CALMIT bagged hydrated lime powder) was dried analogously with this, and its cooling and packaging was performed identically with those of the A-1 filler.

The binder was measured in a 200 litre metal drum, into which, during and after a dry air flushing (its dew point temperature is less than -60 °C) 72 kg Lupranat M200R and 7,2 kg DPO was put. The temperature of the binder was raised to 60 °C in a drum heater, and poured into the dissolver, prewarmed, flushed with warmed and dry air. From the binder about 2 kg resin remains on the wall of the drum in a thin layer.

For the first time charging of the A-1 type filler was started into the dissolver, while its agitator was slowly rotating (about 50 rotation/min). The dried powder was charged intermittently, in 4 portions. Following the addition of the total amount (39.6 kg) the speed of the agitator was doublet (the dissolver can be seen on Picture 2).

Following this, similarly to the A-1 filler, the altogether 23.2 kg A2 type dried powder was charged in 4 portions. Charging of the two powder types took 2×15 minutes. The total charge measured this way was homogenized for an additional 40 minutes with 100 rpm, and the agitator was stopped. The 6 m³ bottle, containing the clean, dry nitrogen was put to the pallet of the dissolver, and the equipment was put under N₂ pressure, its temperature was set to 50 °C, and incubation was continued until next morning.

The impregnation resin prepared this way with the pre-set temperature was directly used for the production of the prepreg.

### Example 2

### Impregnation

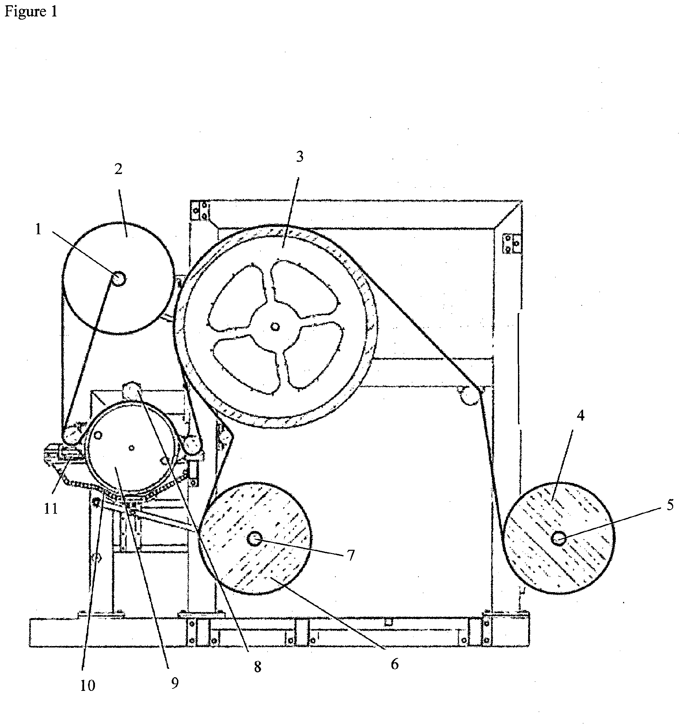

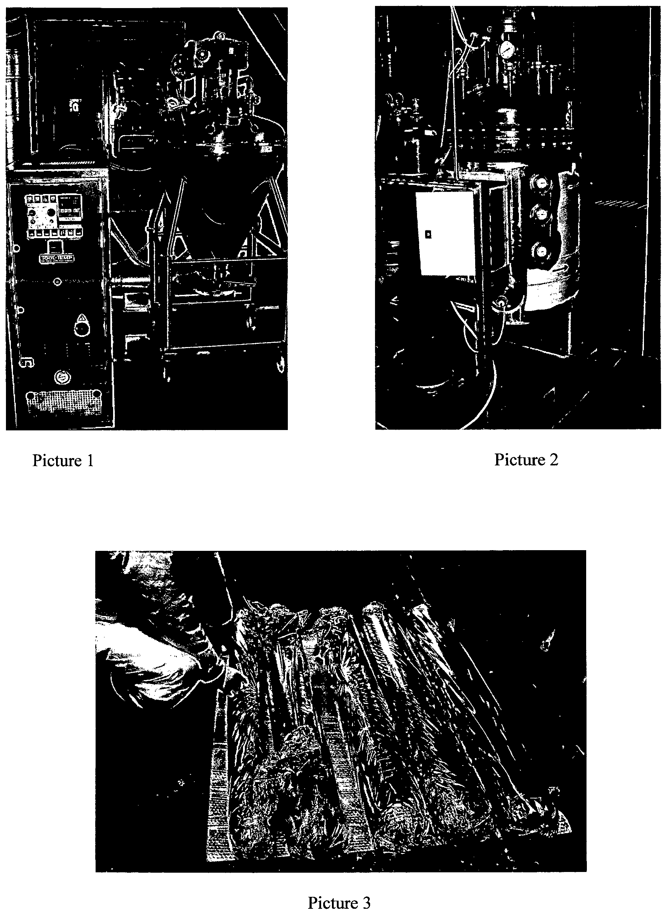

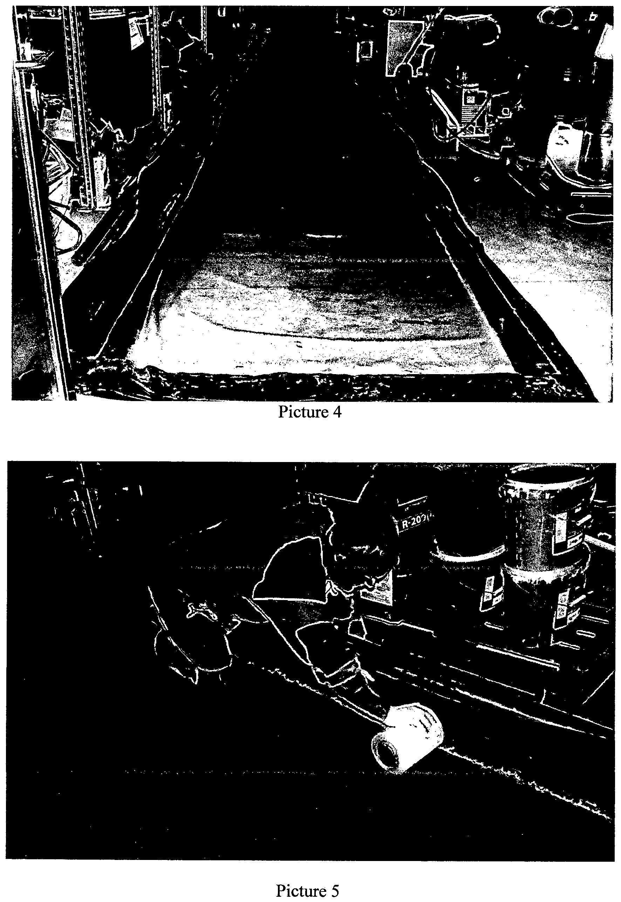

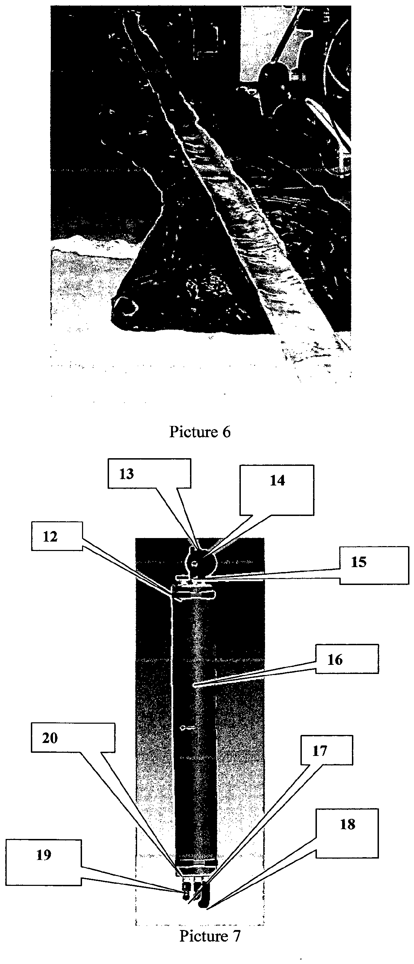

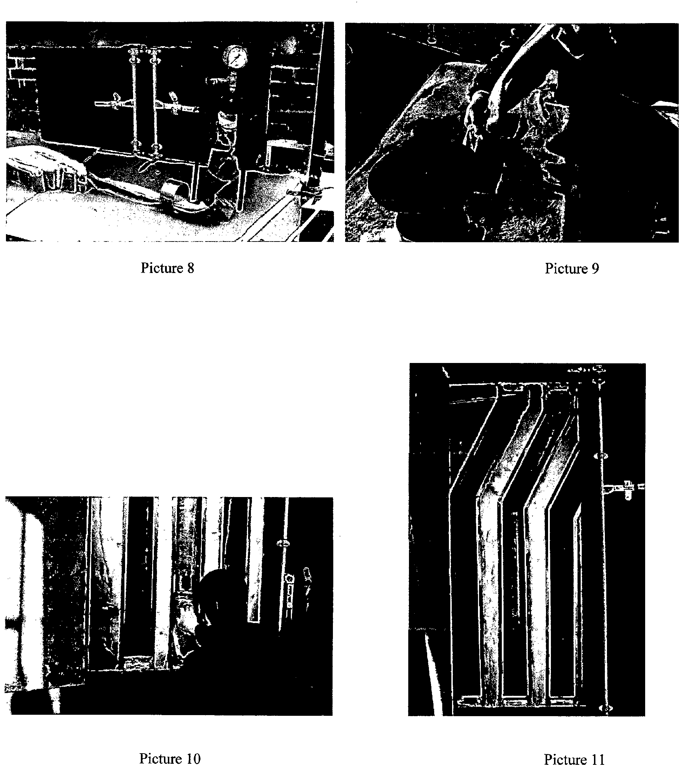

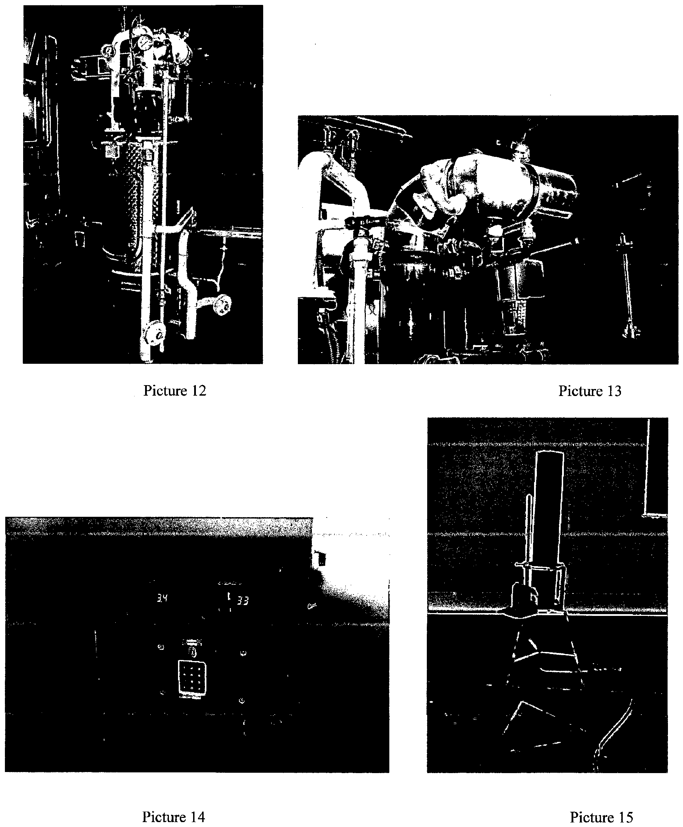

The equipment seen on Figure 1 was used for impregnation.

The material application roller and the resin storage tray of the equipment is heated to 50 °C with water heating. The glass-cloth roll (2330 g/m² and 1.3 m wide) is put to the substructure material storing shaft 1 of the machine, and the separating, silicon impregnated paper roll 6 is put to shaft 7. The expansion tube is put to winder shaft 5. The impregnation resin (its temperature is about 50 °C) is warmed to about 60 °C by starting the electric heating. In the autoclave, in the space over the resin 1 bar N₂ atmosphere is maintained continuously. Charging of the resin storage tray 10 is performed by the pressure of the N₂, through a rubber hose. The 60 kg K-48 resin (60 °C) is charged into the resin storage tray 10 of the preheated machine. The scraper blade 11 slit pitch is set to 0.6 mm, the impregnation speed of the machine is set to 5 m/min. We wait until the different temperature equalize in the resin storage tray 10, at that time the temperature of the resin is about 56 °C. The temperature of the resin is checked with an immersion thermometer at the two ends of the resin storage tray 10. At this time impregnation is started with 5 m/min speed. Cross-impregnability of the glass-cloth is inspected visually on the impregnated fabric. Impregnation is suitable if the gaps between the filaments of the fabric are uniformly filled by the resin, the fabric becomes uniformly impregnated. This visual inspection is performed on the impregnated fabric, on the section after the drying roller 3. If this is found faultless then the impregnation speed is gradually increased to 10 m/min. Refilling of the resin storage tray 10 with the resin is performed in the time of the roll-changes. The prepreg rolls are carefully (airtight) packaged into gas- and vapour-tight foil, to exclude the water vapour during transportation or storage (the packaged prepreg rolls can be seen on Picture 3).

### Example 3

### Hose preparation from the prepreg roll

A working foil is laid out to a smooth, hard surface, the length of the foil is about 1-2 m longer than that the hose to be prepared, its width is at least 1.5 m. From the prepreg roll a portion 20 cm longer than the length of the hose is rolled down and cut, together with the separating foil. Thereafter the roll is carefully packaged back into its airtight, vapour-tight package.

The cut material is put to the working foil prepared in advance, in unfolded condition in such a way that the separation foil is at the bottom (the prepreg rolled down, laid to the working foil can be seen on Picture 4). Thereafter a piece is cut from the polyethylene tube with 100 µm wall thickness, with the diameter corresponding to the diameter of the desired hose, than tube, having a length equal to the length of the prepreg. This foil hose is laid at the edge of the prepreg, in full length. The foil hose placed this way is bonded to the resin surface of the prepreg with mild, uniform pressure (placing of the polyethylene foil hose can be seen on Picture 5). Thereafter the prepreg is rolled up to the hose with identical width with the foil hose, with folding motions of identical width, without the siliconized paper. Folding is performed in full length, in such a way that each folding should be done in the full length of the prepreg. The prepreg folded to the foil hose is folded to "U" shape in length, and pulled into the polyester calibration hose with length identical with the length of the prepreg. The calibration hose is made with an external diameter identical with the external diameter of the tube to be prepared. Following threading the prepreg folded in "U" shape is opened and arranged in the calibrating hose (arrangement of the folded, arranged prepreg in the calibration hose can be seen on Picture 6).

### Example 4

### Quality control

Large scale laboratory quality control is performed on an arbitrarily chosen 1 m piece of the hose prepared according to Example 3. In the course of the operation connection elements are fixed to the ends of the hose, serving steam inlet and outlet. The external cylindrical surface of the connection elements is put into the polyethylene hose located inside the hose, and with the pipe clip put to the outer surface of the calibrating hose the hose, already with three layers is pressed to the surface of the connecting element, providing with this its tight seal (the prepreg hose assembled for heat treatment can be seen on Picture 7.

Steam is introduced through the steam inlet valve put to connecting element 17. The pressure of the steam presses the prepreg tube 16 to the calibrating polyester hose, this is the way as the compact structure of the tube forms. Steam pressure is adjusted at steam outlet valve 14. Pressure is checked with manometer 13. About 100 °C steam is used for the heat treatment, for about 1-1.5 hours. During this time the prepreg hose 16 becomes round, and cures. Thereafter the connecting elements 15 and 17 are removed from the cured tube, and the polyethylene hose is also removed from the inside of the tube. Thereafter the gas tightness and mechanical characters of the tube are checked. Following the quality control mentioned above still long (about 12 meters) hoses are prepared from the industrially produced prepreg materials, and some 14×14 cm flues of the experimental chimney block built on the site of the Polinvent Kft. were duly equipped with the liner pipe, exactly the same way as the Furanflex® type liner materials (authorized by ÉMI) were built in. Some characteristic moments of building in the liner hoses prepared from the industrially produced prepregs are illustrated on Pictures 8-11.

The suitability of the operationally built in and heat treated, already cured liner pipes with high strength was checked with the gas boiler connected to the experimental chimney block and with a measuring system (the gas boiler and the measuring system can be seen on Pictures 12-14). The long-lasting thermo resistance tests conducted proved, that the liner pipes prepared with the synthetic resins of the invention are significantly more thermo resistant than the commercially available Furanflex® type liner pipes.

Another advantage of the invention that it has a significantly longer shelf life than the materials known from the prior art. The results of the shelf life investigations demonstrate that in case of water tight packaging the prepreg raw material retained its characteristics without deterioration in quality for more than 1 year at 18-22 °C, and excellent, flexible house could be prepared from it, whose incorporation (pulling in, inflation, and heat treatment) proved to be trouble free.

The results of the laboratory, pilot plant and plant experiments mentioned above are clearly proving that the goal of the invention was entirely achievable with the solution of the invention. Storage for a long period of time is significantly more economical than in case of the compositions known from the prior art, needing continuous cooling below 8 °C.

Further advantage of the solution of the invention, that the material developed is a sufficiently flame retarded, i.e. self-extinguishing material, and doesn't melt even by the effect of open flame. According to our measurements although it darkens and blacks out around 300 °C temperature, but this degradation is moving towards graphitization, and the resulting special composite remains latching even during long lasting thermal effects (40-50 hours, continuous thermal effects around 400 °C) (Picture 15).

## Claims

1. A prepreg for lining chimneys, comprising a polyisocyanate based impregnating resin system, which is a liquid polyisocyanate mixture, containing more than 50 % by weight MDI based di- and polyisocyanates, which polyisocyanates consist of raw P-MDI, polymer P-MDI homologs and isomers, MDI based prepolymers and modified MDIs, which resin additionally contains one or more, originally powdery inorganic hydroxides at an amount of less than 50 % by weight, in suspended form.

2. The prepreg of Claim 1, wherein the originally powdery inorganic hydroxide is a hydroxide, which does not release water around room temperature, but in the range of 90-110 °C provides water by reacting with the CO₂ released in during a water-isocyanate reaction.

3. The prepreg according to Claim 1 or 2, wherein the inorganic hydroxide is Ca(OH)2, Mg(OH)2 or Ba(OH)2, or any mixture thereof.

4. Prepreg according to any one of Claims 1-3, wherein the Ca(OH)2, Mg(OH)2 or Ba(OH)2, or any mixture thereof is present in at least 80 % by weight in the inorganic hydroxide.

5. Prepreg according to any one of Claims 1-4, wherein the inorganic hydroxide powder contains magnesium hydroxide carbonate (4MgCO3Mg(OH)2·5H2O), CaO or MgO or similar as impurity, accompanying material and/or water retaining agent.

6. Prepreg according to any one of Claims 1-5, wherein the resin system contains at most 40 % by weight amount of inert filler, related to the total amount of the resin system.

7. The prepreg according to Claim 6, wherein the inert filler is fine-grained calcium carbonate, magnesium carbonate, dolomite, quartz, graphite or talc or similar, or any mixture thereof.

8. Process for the preparation of prepreg, **characterized in that** a substructure material is impregnated with a resin system which is a liquid polyisocyanate mixture, containing more than 50 % by weight MDI based di- and polyisocyanates, which polyisocyanates consist of raw P-MDI, polymer P-MDI homologs and isomers, MDI based prepolymers and modified MDIs, which resin additionally contains one or more, originally powdery inorganic hydroxides at an amount of less than 50 % by weight, in suspended form, using any of the known prepreg making methods, in the course of the impregnation siliconized paper layer is put to the impregnated substructure material, the material obtained this way is rolled to paper core tubes, and finally provided with water-vapour tight packaging.

9. Process according to Claim 8, **characterized in that** impregnation is carried out at 30-70 °C resin system temperature.

10. Process according to any one of Claims 8 or 9, **characterized in that** the speed of impregnation is 0.5-50 m/min, preferably 5-15 m/min.

11. Process according to any of Claims 8-10, **characterized in that** glass-cloth or polyester fabric is used as substructure material.

12. Process according to any of Claims 8-11, **characterized in that** the water-vapour tight package is a two- or multi-layered packaging material provided with an aluminium layer, or a water-vapour tight, tube-like capsule.

13. Process for chimney lining, **characterized in that** the prepreg of claims 1 to 7 is used for lining, wherein the following steps are used in the process: from the prepreg suitable size hoses are formed with one of the methods known, and an extruded, one- or multi-layered heat-treatment hose is put inside the prepreg hose, a polyester calibrating hose is pulled to the double-walled hose obtained this way, finally the three-layered hose is introduced into the chimney flue, clamped to the necessary fittings, the prepreg hose is inflated with the heat-treatment hose, and the temperature necessary for curing is provided with the heat-treatment hose mentioned, by blowing through the hose hot steam, mixture of steam and air, or mixture of flue and steam.

14. Method according to Claim 14, wherein curing is performed at a temperature of 90-110 °C, for 0.5-5 hours, preferably for 1-2 hours.

## Patentansprüche

1. Prepreg zum Auskleiden von Schornsteinen, umfassend ein Polyisocyanat basiertes imprägnierendes Harzsystem, das eine flüssige Polyisocyanat-Mischung ist, die mehr als 50 Gewichtsprozent MDI basierte Di- und Polyisocyanate umfasst, wobei die Polyisocyanate aus rohem P-MDI, Polymer P-MDI Homologen und Isomeren, MDI basierten Vorpolymeren und modifizierten MDIs bestehen, wobei das Harz zusätzlich einen oder mehrere ursprünglich pulverförmige anorganische Hydroxide in einer Menge von weniger 50 Gewichtsprozent in suspendierter Form umfasst.

2. Prepreg nach Anspruch 1, wobei das ursprünglich pulverförmige anorganische Hydroxid ein Hydroxid ist, das kein Wasser um Raumtemperatur herum abgibt, aber in dem Bereich von 90-110°C Wasser bereitstellt mittels Reagieren mit dem CO2, das während einer Wasser-Isocyanat Reaktion abgegeben wurde.

3. Prepreg nach Anspruch 1 oder 2, wobei das anorganische Hydroxid Ca(OH)2, Mg(OH)2 oder Ba(OH)2 oder eine Mischung daraus ist.

4. Prepreg nach Anspruch 1 - 3, wobei das Ca(OH)2, Mg(OH)2 oder Ba(OH)2 oder irgendeine Mischung daraus in mindestens 80 Gewichtsprozent in dem anorganische Hydroxid vorhanden ist.

5. Prepreg nach einem der Ansprüche 1 - 4, wobei das anorganische Hydroxidpulver Magnesiumhydroxidcarbonat (4MgCO3Mg(OH)2-5H2O), CaO oder MgO oder ähnliches als Unreinheit, begleitendes Material und/oder Wasser zurückhaltenden Wirkstoff enthält.

6. Prepreg nach einem der Ansprüche 1 - 5, wobei das Harzsystem mindestens 40 Gewichtsprozent einer inerten Füllung enthält, die mit dem gesamten Betrag des Harzsystems in Bezug steht.

7. Prepreg nach Anspruch 6, wobei die inerte Füllung ein fein-körniges Kalziumcarbonat, Magnesiumcarbonat, Dolomit, Quarz, Graphit oder Talk oder ähnliche oder eine Mischung daraus ist.

8. Verfahren zur Vorbereitung eines Prepreg, **dadurch gekennzeichnet, dass** ein Substrukturmaterial mit einem Harzsystem imprägniert wird, das eine flüssige Polyisocyanat-Mischung ist, die mehr als 50 Gewichtsprozent MDI basierter Di- oder Polyisocyanate enthält, wobei die Polyisocyanate aus rohem P-MDI, Polymer P-MDI Homologen und Isomeren, MDI basierten Vorpolymeren und modifizierten MDIs bestehen, wobei das Harz zusätzlich ein oder mehrere ursprünglich pulverförmige anorganische Hydroxide in einer Menge von weniger als 50 Gewichtsprozent in suspendierter Form enthält, unter Verwendung von irgendeinem der bekannten Prepreg-Herstellungsverfahren, wobei im Zuge des Imprägnierens eine silikonisierte Papierschicht auf das imprägnierte Substrukturmaterial gelegt wird, wobei das Material, das auf diese Weise hergestellt wurde, zu Papierkernröhren gerollt wird, und schließlich mit einer wasserdampfdichten Verpackung ausgestattet wird.

9. Verfahren nach Anspruch 8, **dadurch gekennzeichnet, dass** die Imprägnierung bei 30 - 70°C Harzsystemtemperatur ausgeführt wird.

10. Verfahren nach einem der Ansprüche 8 oder 9, **dadurch gekennzeichnet, dass** die Geschwindigkeit der Imprägnierung 0,5 - 50 m/min, vorzugsweise 5 - 15 m/min ist.

11. Verfahren nach einem der Ansprüche 8 - 10, **dadurch gekennzeichnet, dass** Glass-Stoff odar Polyester-Gewebe als Substrukturmaterial verwendet wird.

12. Verfahren nach einem der Ansprüche 8 - 11, **dadurch gekennzeichnet, dass** die wasserdarnpfdichte Verpackung ein Zwei- oder Mehrschichtverpackungsmaterial ist, das mit einer Aluminiumschicht oder einer wasserdampfdichten rohrförmigen Kapsel ausgestattet ist.

13. Verfahren zum Auskleiden eines Schornsteins, **dadurch gekennzeichnet, dass** das Prepreg nach den Ansprüchen 1 bis 7 zum Auskleiden verwendet wird, wobei die folgenden Schritte in dem Prozess verwendet werden aus dem Prepreg werden Schläuche geeigneter Größe geformt mit einem der bekannten Verfahren, und ein extrudierter, cin- oder mehrschichtiger wärmebehandelter Schlauch wird in den Prepregschlauch eingesetzt, ein Polyesterkalibrierungsschlauch wird zu dem so erhaltenen doppelwandigen Schlauch gezogen, schließlich wird der dreischichtige Schlauch in den Schornsteinzug eingeführt, an die notwendigen Fittings geklemmt, der Prepregschlauch wird aufgeblasen mit dem wärmebehandelten Schlauch, und die zum Aushärten notwendige Temperatur wird mit dem erwähnten wärmebehandelten Schlauch bereitgestellt mittels Blasen von heißem Dampf, einer Mischung aus Dampf und Luft oder einer Mischung aus Rauch und Dampf durch den Schlauch.

14. Verfahren nach Anspruch 14, wobei das Aushärten bei einer Temperatur von 90 - 110°C für 0,5 - 5 Stunden, vorzugsweise 1 - 2 Stunden ausgeführt wird.

## Revendications

1. Préimprégné destiné au chemisage de cheminées, comprenant un système de résine d'imprégnation à base de polyisocyanate, qui est un mélange de polyisocyanates liquide, contenant plus de 50 % en poids de di- et poly-isocyanates à base de MDI, lesquels polyisocyanates sont constitués de P-MDI brut, d'homologues et isomères de P-MDI polymères, de prépolymères à base de MDI et de MDI modifiés, laquelle résine contient en outre un ou plusieurs hydroxydes inorganiques, initialement pulvérulents, en une quantité inférieure à 50 % en poids, sous forme de suspension.

2. Préimprégné selon la revendication 1, dans lequel l'hydroxyde inorganique initialement pulvérulent est un hydroxyde, qui ne libère pas d'eau à une température proche de la température ambiante, mais, dans la plage de 90 - 110 °C, fournit de l'eau en réagissant avec le CO2 libéré pendant une réaction eau-isocyanate.

3. Préimprégné selon la revendication 1 ou 2, dans lequel l'hydroxyde inorganique est Ca(OH)2, Mg(OH)2 ou Ba(OH)2, ou n'importe quel mélange de ceux-ci.

4. Préimprégné selon l'une quelconque des revendications 1 - 3, dans lequel le Ca(OH)2, Mg(OH)2 ou Ba(OH)2, ou n'importe quel mélange de ceux-ci est présent à raison d'au moins 80 % en poids dans l'hydroxyde inorganique.

5. Préimprégné selon l'une quelconque des revendications 1 - 4, dans lequel la poudre d'hydroxyde inorganique contient du carbonate d'hydroxyde de magnésium (4MgCO3Mg(OH)2-5H2O), CaO ou MgO ou similaire en tant qu'impureté, matériau d'accompagnement et/ou agent de rétention d'eau.

6. Préimprégné selon l'une quelconque des revendications 1 - 5, dans lequel le système de résine contient une quantité d'au plus 40 % en poids de charge inerte, par rapport à la quantité totale du système de résine.

7. Préimprégné selon la revendication 6, dans lequel la charge inerte est du carbonate de calcium, carbonate de magnésium, dolomite, quartz, graphite ou talc ou similaire, à grains fins, ou n'importe quel mélange de ceux-ci.

8. Processus de préparation d'un préimprégné, **caractérisé en ce qu'**un matériau de structure secondaire est imprégné avec un système de résine qui est un mélange de polyisocyanates liquide, contenant plus de 50 % en poids de di- et poly-isocyanates à base de MDI, lesquels polyisocyanates sont constitués de P-MDI brut, d'homologues et isomères de P-MDI polymères, de prépolymères à base de MDI et de MDI modifiés, laquelle résine contient en outre un ou plusieurs, hydroxydes inorganiques initialement pulvérulents en une quantité inférieure à 50 % en poids, sous forme de suspension, en utilisant n'importe lequel des procédés connus de fabrication de préimprégné, au cours de l'imprégnation, une couche de papier siliconé est placée sur le matériau de structure secondaire imprégné, le matériau obtenu de cette façon est enroulé en mandrins tubulaires en papier, et finalement pourvu d'un emballage étanche à la vapeur d'eau.

9. Processus selon la revendication 8, **caractérisé en ce que** l'imprégnation est effectués à une température de système de résine de 30 - 70 °C.

10. Processus selon l'une quelconque des revendications 8 ou 9, **caractérisé en ce que** la vitesse d'imprégnation va de 0,5 - 50 m/min, de préférence 5 - 15 m/min.

11. Processus selon l'une quelconque des revendications 8 - 10, **caractérisé en ce qu'**une toile de verre ou un tissu de polyester est utilisé en tant que matériau de structure secondaire.

12. Processus selon l'une quelconque des revendications 8 - 11, **caractérisé en ce que** l'emballage étanche la vapeur d'eau est un emballage à deux couches ou plus, pourvu d'une couche d'aluminium, ou une capsule tubulaire étanche à la vapeur d'eau.

13. Processus de chemisage de cheminées, **caractérisé en ce que** le préimprégné selon les revendications 1 à 7 est utilisé pour le chemisage, dans lequel les étapes suivantes sont utilisées dans le processus ; à partir du préimprégné, des tuyaux de taille appropriée sont formés à l'aide d'un des procédés connus, et extrudés, un tuyau de traitement thermique monocouche ou multicouche est placé à l'intérieur du tuyau de préimprégné, un tuyau d'étalonnage en polyester est tiré vers le tuyau à double paroi obtenu de cette façon, et enfin le tuyau à trois couches est introduit dans le conduit de cheminée, attaché aux raccords nécessaires, le tuyau de préimprégné est gonflé avec le tuyau de traitement thermique, et la température nécessaire pour le durcissement est fournie avec le tuyau de traitement thermique mentionné, en soufflant, à travers le tuyau, de la vapeur chaude, un mélange de vapeur et d'air, ou un mélange de fumée de cheminée et de vapeur.

14. Procédé selon la revendication 14, dans lequel le durcissement est effectué à une température de 90 - 110 °C, pendant 0,5 - 5 heures, de préférence pendant 1 - 2 heures.
